# EUROPEAN PATENT SPECIFICATION

(11) **EP 0 969 934 B1**
(45) Date of publication and mention of the grant of the patent: **28.12.2005**
(21) Application number: 98909217.6
(22) Date of filing: 20.03.1998
(51) Int. Cl.: B05D 3/06, B05D 3/10, B05D 5/00, C03C 17/28, C03C 17/30, C03C 17/32, C08J 7/04, C08J 7/06, C23C 26/00, B05D 1/12, B05D 1/06, B05D 1/24, B05D 5/08

(54) **METHOD OF APPLYING A HYDROPHOBIC FILM AND OBJECT THUS COATED**
VERFAHREN ZUM AUFBRINGEN EINES HYDROPHOBEN FILMS UND GEGENSTAND DAMIT BESCHICHTET
METHODE D'APPLICATION D'UN FILM HYDROPHOBE ET SUBSTRAT AINSI REVETU

(30) Priority: 20.03.1997 AU PO578997
(43) Date of publication of application: 12.01.2000
(73) Proprietor: UNISEARCH LIMITED, Kensington New South Wales, 2033 (AU)
(72) Inventor: LAMB, Robert, Norman, Engadine, NSW 2233 (AU); ZHANG, Hua, Hillsdale, NSW 2036 (AU); RASTON, Colin, Llewellyn, East Oakleigh, VIC 3168 (AU)
(74) Representative: Stuart, Ian Alexander
(86) International application number: PCT/AU1998/000185
(87) International publication number: WO 1998/042452

(56) References cited:
- EP-A- 0 490 416
- WO-A-94/09074
- GB-A- 1 302 063
- GB-A- 1 335 957
- GB-A- 2 244 489
- US-A- 4 403 003
- US-A- 5 260 353
- DERWENT ABSTRACT, Accession No. 1993-020566/03, Class P73; XP002958093 & JP,A,04 335 042 (DAICEL CHEM. IND. LTD.) 24 November 1992.
- DERWENT ABSTRACT, Accession No. 95-012038/02, Class A82, G02, (A14) XP002958094 & JP,A,06 299 088 (MITSUBISHI RAYON CO. LTD.) 25 October 1994.

## Description

### Technical Field

This invention relates to the technology of protective coatings. In particular, the invention relates to film-coating materials which have a low propensity to wet and to methods for making the films. Water resistant or water proof coatings, as well as being useful for water proofing various types of surfaces, can also render such surfaces resistant to icing and fouling. The coatings can also render protected surfaces resistant from attachment by water soluble electrolytes such as acids and alkalies, and from microorganisms.

### Background Art

It is well understood that the wettability of various materials is dependent on both the physical and chemical heterogeneity of the material. The notion of using the contact angle θ made by a droplet of liquid on a surface of a solid as a quantitative measure of the wetting ability of the particular solid has also long been well understood. If the liquid spreads completely across a surface and forms a film, the contact angle θ is 0°. If there is any degree of beading of the liquid on the surface of the solid, the surface is considered non-wetting.

For water, where the contact angle is greater than 0°, the solid is considered hydrophobic. Examples of materials on which liquid droplets have high contact angles, include water on paraffin which has a contact angle of about 107° and mercury on soda-lime glass which has a contact angle of about 140°.

In the past, surfaces have been protected against encrustation, corrosion, icing and fouling by means of coatings containing polymer films, hydrophobic solid fillers and hydrophobic liquids. One disadvantage of the use of such coatings is that they do not achieve multi-purpose protection since they are not generally versatile enough to protect against damage from a variety of causes.

International Application No WO 94/09074 discloses a multi-purpose solid surface modifier which comprises a composition containing a highly dispersed hydrophobic powder, a silicone liquid, a solvent, and an adhesive for binding the powder together and to the surface. The modifier is described as being effective in imparting water repellent, anti-fouling, anti-icing, anti-corrosive and anti-friction properties to various surfaces. Although the specification describes exceptionally good experimental results. allegedly providing contact angles in some cases in excess of 175°. in practice it is very difficult to accurately measure contact angle data in excess of 165°.

The present inventors have now developed methods of producing hydrophobic films that are an improvement over the prior art methods. The present invention arises in part from the realisation that the hydrophobicity of a surface coating is determined by two factors, the first being the chemical properties of the material making up the hydrophobic coating or film, and the second being the physical surface conditions.

### Disclosure of Invention

In a first aspect, the present invention consists in a method of applying an hydrophobic film to a surface, the method comprising the steps of:
(a) optionally modifying particles to be coated on the surface so as to form functional groups thereon;
(b) applying particles having functional groups thereon to the surface to be coated: and
(c) treating the applied particles such that the particles are bound together and to the surface by chemical cross-linking of the functional groups on the particles to form thereby a hydrophobic film wherein the functional groups are crosslinked.

In a preferred embodiment of the present invention the method comprises prior to step (b) the step of mixing particles having functional groups thereon with a non-silicone polymer reactive to the functional groups on the particles.

In a further preferred embodiment of the present invention, the particles are silica particles. preferably having a diameter of between 20 to 100 nm. Silica is cheap and is readily available as a commercial powdered product, known as aerosil flamed silica. whose powder particles are of a suitable size. Although silica and silica-based particles are preferred, other materials of hydrophobic character which can be prepared in a sufficiently small particulate size could be used. Examples include oxides such as titanium dioxide.

The optional modifying step can be any means to form active functional groups that will allow the particles to chemically bond or cross-link to each other and to the surface to be coated. The present inventors have found that when using silica particles, silylalkylmethacrylate groups such as silylpropylmethalcrylate (or related) functional groups, or a mixture of those functional groups and passive silylalkyl groups are particularly suitable. The methacrylate functional groups act as centres for chemically linking the particles. There are also silica particles commercially available that have suitable functional groups thereon such that step (a) can be optional.

Chemical cross-linking of the functional groups on the particles may be achieved by the addition of a copolymerisation monomer, such as styrene, to link methacrylate functional groups from one particle to methacrylate functional groups of another.

Alternatively, cross-linking of the particles is also be possible without the use of monomers, if contact between methacrylate groups from different particles is favourable. It will be appreciated that this will depend on the length of the alkyl chain of the functional group.

Either type of cross-linking can be activated photolytically by means of ultra-violet radiation or by using a radical initiator such as benzoyl peroxide or diethoxyacetophenol.

Preferably, the particles (and the polymer, when used) are applied to the surface in a slurry. This can be achieved using a solvent, preferably an organic solvent. One solvent found to be particularly suitable for silica particles is hexane. It will be appreciated, however, that other solvents would also be suitable.

The present inventors have found that the cross-linking of the particles when applied to a surface results in the attachment of the particles on the surface thereby forming a hydrophobic film.

In order to obtain a more durable coating, the use of a non-silicone polymer is preferred. A particularly suitable non-silicone polymer is polyurethane. Preferably, the polyurethane is formed by the reaction of di- or poly-isocyans with polyols. Isocyanates may react, under suitable conditions, with the active hydrogen atoms of the urethane linkages to form biuret.

In a preferred method, methylene bis(phenyl isocyanate) (MDI) was chosen to react with polydimethylsiloxane (PDMS) with hydroxyl groups terminated or 2,2,3,3,4,4,5,5-octafluoro-1,6-hexanediol. The produced prepolymer has some free isocyanate groups on the chain. Toluene or ethyl acetate can be used as suitable solvents. The prepolymer is mixed with silica powder so that the isocyanate groups on the prepolymer can react with the silanol groups on the powder surface to chemically bond the particles together and to the surface to be coated.

The method of the present invention produces hydrophobic films with a contact angle of water of at least 150°, preferably at least 160°, and most preferably about 165°.

In a second aspect, the present invention consists in an object having at least a portion of its surface coated with a hydrophobic film applied by the method according to the first or second aspects of the present invention.

The surfaces to be treated can include metals, alloys, glasses, papers, ceramics, polymers, composites, and other materials. The surface treatment can be used to inhibit corrosion, formation of crystallisation centres in water pipe lines, closed heat exchangers, tubular boilers, chillers and refrigerators which utilise water, brine solutions, inorganic acids, alkalies, other electrolytes, and other corrosive fluids as coolants. The treatment can be used to prevent icing on surfaces, to produce anti-griping hydrophobic coatings for aboveground fixed facilities such as buildings and other structures, to provide anti-icing and anti-corrosion coatings for aircraft; or to provide anti-icing, anti-fouling and anti-corrosion coatings for maritime and inland waterway vessels.

Other uses include to improve the resistance of metallic roofs to microflora colonisation; to provide water resistance, waterproofing, and ecological protection to slate and tile; to provide ecologically sound rubberoid and bitumen roofing felt; to provide water and moisture repellent cork material from paper, container board polyurethane foam and shavings. The coating may be used for extending the survivability, performance, and reliability of instruments and equipment.

Other uses include to protect granular construction materials including cement, alabaster and chalk for long-term storage, particularly in high humidity regions; extend the life cycle of ferro-concrete, concrete stone, brick, concrete cinder block and wooden structures and buildings exposed to weather conditions and microorganisms; protect frescoes, mouldings, buildings of architectural significance, gypsum structures, church and mosque domes, works of art and manuscripts from atmospheric moisture and nucroorganisms.

Still other uses envisaged include to reduce drag for vessels such as canoes, yachts, ships, and other watercraft; improve the performance, reliability and corrosion resistance of cooling systems in internal combustion engines utilising closed heat exchangers having liquid heat transfer agents; provide anti-corrosive and anti-icing coatings for undercarriages of vehicles such as tractors and combines and for agricultural machinery in general. The coating may reduce labor intensity and improve product quality for laminated plastic products by reducing mechanical adhesion between the surfaces of compression moulds, punches, dies and product surfaces; assist the uniform distribution of dispersed fillers, such as wool, carbon fibres, fibreglass, artificial fibres, both in solution and suspension; encapsulate hydrophilic liquids including toxic liquids; moisture seal materials; provide "dry water" fire fighting materials; provide surfaces for facilitating pipeline transfer of granular material such as ore, coke, fertilisers or coal.

The film according to the present invention may also be used to waterproof building foundations and structures and radioactive waste storage facilities; extend the operating service life of water cooling towers; protect railroad ties from microflora; provide anti-icing coatings for cooling chambers, refrigerators and chillers; extend the life cycle of hydroelectric power dams: improve the efficiency of wind driven motors; improve performance characteristics of concrete and asphalt in open roadways, highways and thoroughfares; increase the life cycle of automobile tires; adsorb ions of heavy metals and radionuclides; provide anti-abrasive lubricants for ball bearings and other working parts; provide water repellent footwear; waterproof electric motors and electric insulators; waterproof pressurised suits such as diving suits.

Other uses include to conserve paper, books, securities and documents in archives and storage facilities; provide hydrophobic black paste used for waterproof ink in pens; provide hydrophobic denim; provide hydrophobic tents, clothing, umbrellas, raincoats, and suits; provide hydrophobic funnel filters for use with gasoline and petroleum products; provide hydrophobic sails; provide hydrophobic fishing nets; waterproof fur products; render wallpaper water resistant; conserve die colours; provide skin protection from burns, acids, bases, other electrolytes, rocket fuels, highly toxic materials and flammable solutions; provide hydrophobic foam for ecological protection of the atmosphere and fauna and flora against accidental spills of highly toxic poisons and rocket fuels; protect electric train current collectors from ice and corrosion; provide de-icing of airport runways; preserve vegetables and fruits under long-term storage; provide water, moisture and acid resistant footwear; provide waterproofing of printed circuit boards; provide waterproof lubricants to improve sky slip; localise vaporisation of corrosive fluids in emergencies; improve longevity and performance reliability of pumps and pipelines carrying inorganic acids, alkalies and other corrosive media; encapsulate acid, base, other electrolyte and other corrosive solutions as well as hydrocarbons for transport and storage; provide hydrophobic anti-agglomeration agents; preserve instruments, equipment and devices by means of conservation lubricants; and protect radio repeater and radar antennas from corrosion and icing.

In order that the present invention may be more clearly understood, preferred forms will be described with reference to the following examples and the accompanying drawings.

### Brief Description of Drawings

Figure 1 shows a XPS spectrum of a powder-only coating;
Figure 2 shows a XPS spectrum of a powder-polymer mixture coating;
Figure 3 shows a SIMS spectrum of a microbiological test sample of powder-polymer mixture coating before washing; and
Figure 4 shows a SIMS spectrum of a microbiological test sample of powder-polymer mixture coating after washing.

### Modes for Carrying Out the Invention

In one preferred method, silica powder is treated with a trimethoxysilylalkylmethacrylate such as trimethoxysilylpropylmethacrylate (or a related compound) and subsequently treated with trimethoxysilylalkane. The treatment with the trimethoxysilylpropylmethacrylate bonds silylpropylmethacrylate groups to the silica. The treatment with trimethoxysilylakane bonds passive silylalkane groups to the silica which increase the hydrophobicity of the silica particle.

Alternatively, both the trimethoxysilylpropylmethacrylate and the trimethoxysilylalkane can be used simultaneously to attach the necessary groups to the silica.

The modified silica particles are then placed in a suitable solvent. The particles may be suitably dispersed in a slurry in hexane, for example. The slurry can be stirred and sonicated at 40 Hz to improve the dispersion of the particles in the slurry. A suitable surface is then coated with the slurry and the slurry is treated so that the particles cross-link to bind themselves together and to the surface itself.

The cross-linking may be achieved by the addition of a copolymerisation monomer such as styrene to link the functional methacrylate groups from one particle to functional methacrylate groups of another.

In an alternative embodiment, cross-linking of the particles may be possible without the use of monomers if contact between methacrylate groups from different particles is favourable. This will depend on the length of the alkyl chain in the silylalkylmethalcrylate group.

Cross-linking can be activated either photolytically using ultra-violet radiation or by using a radical initiator such as benzoylperoxide or diethoxyacetophenol.

The balance between the ratio of functional groups to passive groups on the silica particles should be such to optimise the linking of the particles and thus the mechanical strength of the coating whilst maintaining sufficient passive groups to optimise the hydrophobicity of the coating.

The alkyl chain linking the silyl groups and the methacrylate functional group also has a bearing on the characteristics of the coating, and whether cross-linking is possible without the use of monomers.

UVsorbers may be used to facilitate the curing of the films under ultra-violet light if cross-linking is activated photolytically.

The preferred length for the chemical bond connecting the individual particles is about 3Å.

### PREPARATION OF HYDROPHOBIC FILMS

Several steps to improve the hydrophobicity and durability of the film were carried out. These steps included using fumed silica powder to produce rough surface in order to increase hydrophobicity, and employing non-silicone polymer (adhesive) to improve the durability of the film.

### Method I - powder-only deposition

This method involves a slurry of a known concentration of silica powder in hexane at concentration of 2.0 - 2.7% (wt) powder, which was left in an ultrasonic bath to ensure dispersion and aggregate breakdown, and the slurry was then deposited onto a spinning substrate at a spinning rate of from 500 - 2000 rpm. Different concentrations of the slurry and different spinning speeds were investigated to obtain an optimal hydrophobic film with the highest contact angle.

By using this technique, it was possible to obtain a film with contact angle of water approximately 165°. The durability of the film, however, was not ideal in all situations.

### Method II - powder and polymer mixture deposition

To improve the durability of the hydrophobic film, polyurethane was introduced to act as the adhesive which further links the silica powder together by chemical bonding.

Polyurethane are polymers formed by the reaction of di- or poly-isocyans with polyols:

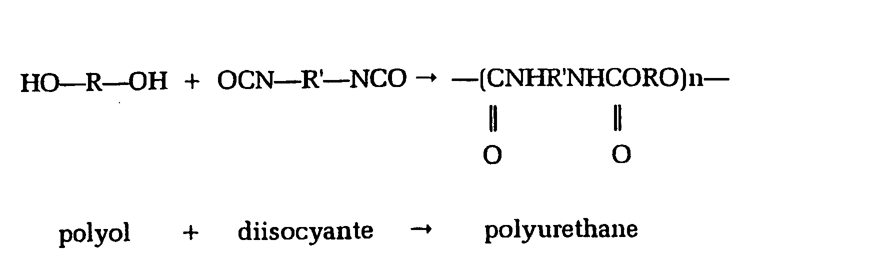

Isocyanates may react, under suitable conditions, with the active hydrogen atoms of the urethane linkages to form biuret.

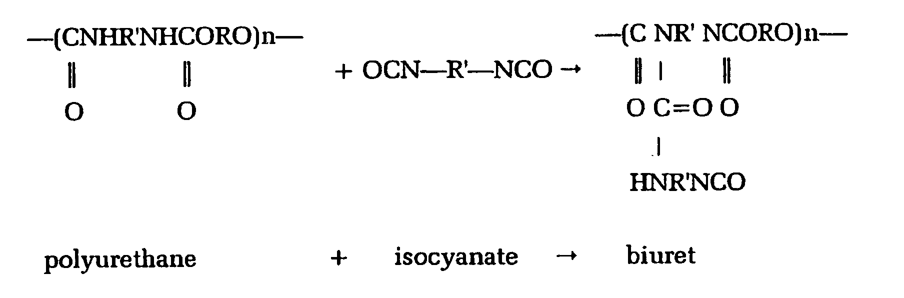

The method involved preparing prepolymer by reacting polyol with stoichiometrical excess of diisocyanates so as to leave some free isocyanate groups on the prepolymer's chain. The synthesised prepolyurethane then reacts with silanol groups on hydrophilic powder surface to make powder and polymer chemically linked together.

The following examples describe more specific methods of bonding silica powder particles together by polyurethane. In a preferred method, 125 grams of methylene bis(phenyl isocyanate) (MDI) was chosen to react with 75 grams of polydimethylsiloxane (PDMS) with hydroxyl groups terminated (viscosity of 90-150 cst) or 121 grams of 2,2,3,3,4,4,5,5-octafluoro-1,6-hexanediol in the presence of 1-10% (wt) of diethanolamine as the catalyst. The produced prepolymer has some free isocyanate groups on the chain. Toluene or ethyl acetate was chosen as the solvent, making a concentration as 20-50% (wt) of polymer. The prepolymer was mixed with hydrophilic silica powder (1:1- 1:2% wt/wt) so that the isocyanate groups on the prepolymer can react with the silanol groups on the powder surface to chemically bond the particles together and to the surface.

The substrates used for method I and method II were rubber, aluminium plates and glass plates.

By using this method, it is possible to obtain a hydrophobic film with the contact angle of water of 160° and having good durability.

### Microbiological Tests

The test was carried on in a container full of fresh sea water. The substrates with the hydrophobic coatings were immersed in the sea water which was bubbled with air and added with nutrient broth every half month to provide the food for microorganisms present. The test was carried out over three months. At the end of the test, the substrates were taken out of the sea water and washed by flowing water. The growth and accumulation of the marine microorganisms on the substrates were assessed by the coverage and the adhesion of the marine microorganisms.

### EXPERIMENTAL RESULTS

### Contact Angle Measurements

Contact angle measurement was carried out by using the sessile drop technique due to the ease and accuracy of the method.

The largest contact angle tested for the coatings prepared by method I was 165° and for the coatings prepared by method II was 160°.

### Durability

It was found that the durability of the powder and polymer coatings was much better than the powder-only film by which powder is physically bonded together. The findings were reinforced by the microbiological test data after 3 months by putting the films under seawater. The powder-only coatings were partly destroyed due to the weaker physical bonding between the powder and the substrate. During the 3-month test, some of the powder coating was removed from the substrate and floated on the surface of seawater. The polyurethane-powder coatings, however, remained intact, even after microorganisms growing on the film surface were washed off by flowing water.

### Resistance to Microorganism Attachment

Due to the improvement of the film durability, the resistant of the coatings to the microbiological growth was also improved. Unlike the powder-only coatings for which some area of the substrate was exposed to the environment during the test, the powder-polymer coatings were firmly bound to the substrate so that all of the substrate was covered by the resistant substance after prolonged exposure to sea water. After three months, the attached microorganisms were very easily removed from the powder-polymer coatings by flowing water.

### Instrumental Analysis of Surface Coatings

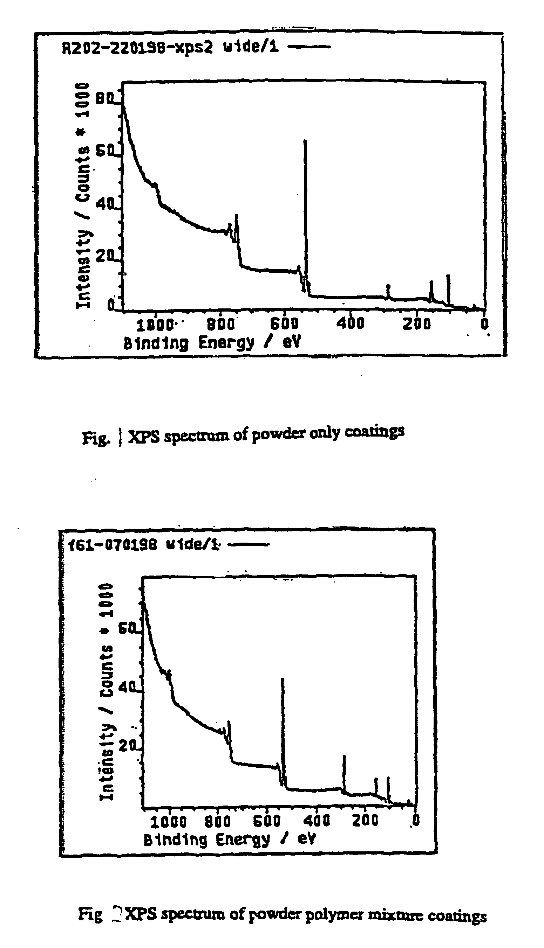

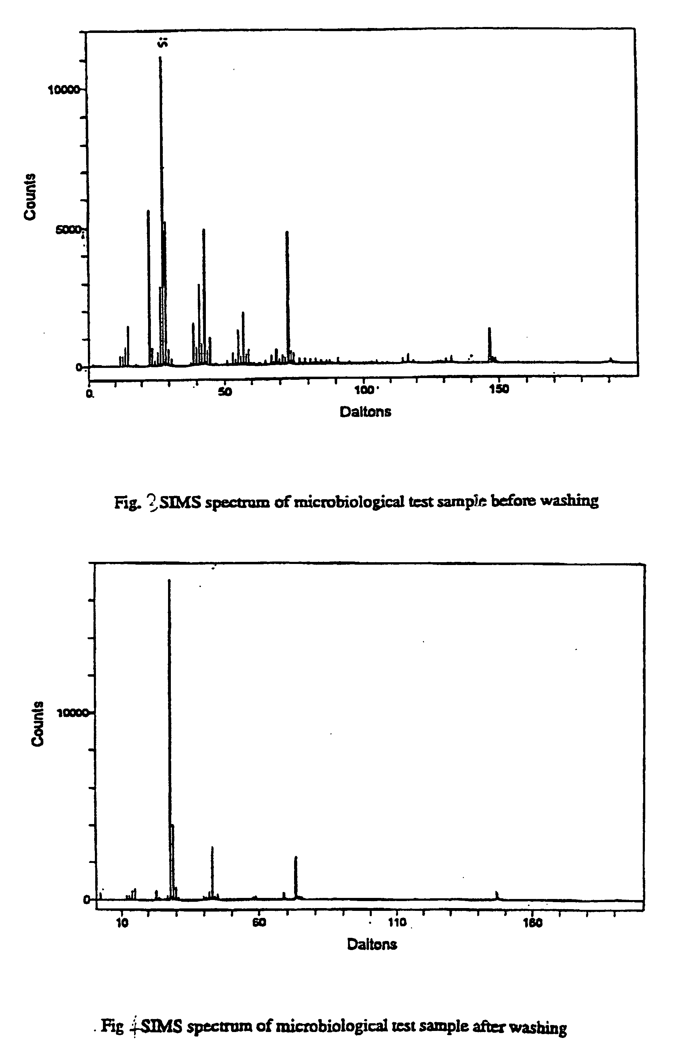

Surface analysis technique were used to determine the chemical composition and surface images of the hydrophobic coatings. Figures 1 and 2 are XPS spectra of powder-only coatings and powder-polymer mixture coatings. respectively. Figures 3 and 4 are spectra of SIMS on the microbiological test samples before and after washing by flowing water. Many hydrocarbon peaks in the spectrum before washing belong to the microorganisms. and after washing the peaks disappear.

## Claims

1. A method of applying an hydrophobic film to a surface, the method comprising the steps of:
(a) optionally modifying particles to be coated on the surface so as to form functional groups thereon;
(b) applying particles having functional groups thereon to the surface to be coated: and
(c) treating the applied particles such that the particles are bound together and to the surface by chemical cross-linking of the functional groups on the particles to thereby form a hydrophobic film wherein the functional groups are crosslinked.

2. The method according to claim 1 wherein, prior to step (b), said: particles having functional groups thereon are mixed with a non-silicone polymer reactive to the functional groups on the particles.

3. The method according to claim 2 wherein the non-silicone polymer is polyurethane.

4. The method according to claim 3 wherein the polyurethane is formed by the reaction of di- or poly-isocyanates with polyols.

5. The method according to claim 4 wherein the polyurethane is formed by the reaction of methylene bis(phenyl isocyanate) (MDI) with polydimethylsiloxane (PDMS) with hydroxyl groups terminated or 2,2,3,3,4,4,5,5-octafluoro-1,6-hexanediol.

6. The method according to any one of claims 1 to 5 wherein the particles are selected from the group consisting of silica particles, and metal oxides.

7. The method according to claim 6 wherein the particles are silica particles.

8. The method according to claim 6 wherein the metal oxide is titanium dioxide.

9. The method according to any one of claims 6 to 8 wherein the particles have a diameter of between 20 to 100 nm.

10. The method according to claim 7 wherein the optional modifying step (a) involves generating silylalkylmethacrylate groups such as silylpropylmethalcrylate (or related) functional groups, or a mixture of those functional groups and passive silylalkyl groups on the silica particles.

11. The method according to claim 10 wherein the chemical cross-linking of the functional groups on the silica particles is achieved by the addition of a copolymerisation monomer, such as styrene, to link methacrylate functional groups from one particle to methacrylate functional groups on another particle.

12. The method according to any one of claims 1 to 11 wherein the cross-linking is activated photolytically by means of ultra-violet radiation or by using a radical initiator such as benzoyl peroxide or diethoxyacetophenol.

13. The method according to any one of claims 1 to 12 wherein the particles and the polymer, if used, are applied to the surface in a slurry.

14. The method according to claim 13 wherein the slurry is in an organic solvent.

15. The method according to claim 14 wherein the solvent is selected from the group consisting of hexane, toluene, and ethyl acetate.

16. The method according to any one of claims 1 to 15 wherein the coated surface has a contact angle of water of at least 150°, preferably at least 160°, and more preferably about 165°.

17. An object having at least a portion of its surface coated with a hydrophobic film applied by the method according to any one of claims 1 to 16.

## Patentansprüche

1. Verfahren zum Aufbringen eines hydrophoben Films auf eine Oberfläche, wobei das Verfahren folgende Schritte umfasst:
(a) gegebenenfalls das Modifizieren von Teilchen, die auf die Oberfläche aufgebracht werden sollen, um funktionelle Gruppen darauf zu bilden;
(b) das Aufbringen von Teilchen mit funktionellen Gruppen auf die zu beschichtende Oberfläche; und
(c) das Behandeln der aufgebrachten Teilchen, sodass die Teilchen durch chemische Vernetzung der funktionellen Gruppen auf den Teilchen aneinander und an die Oberfläche gebunden werden, um so einen hydrophoben Film zu bilden, worin die funktionellen Gruppen vernetzt sind.

2. Verfahren nach Anspruch 1, worin vor Schritt (b) die Teilchen mit funktionellen Gruppen mit einem Polymer, das nicht Silicon ist und welches gegenüber den funktionellen Gruppen auf den Teilchen reaktiv ist, vermischt werden.

3. Verfahren nach Anspruch 2, worin das Polymer, das nicht Silicon ist, Polyurethan ist.

4. Verfahren nach Anspruch 3, worin das Polyurethan durch Umsetzung von Di- oder Polyisocyanat mit Polyolen gebildet wird.

5. Verfahren nach Anspruch 4, worin das Polyurethan durch Umsetzung von Methylenbis(phenylisocyanat) (MDI) mit Polydimethylsiloxan (PDMS) mit Hydroxylendgruppen oder 2,2,3,3,4,4,5,5-Octafluor-1,6-hexandiol gebildet wird.

6. Verfahren nach einem der Ansprüche 1 bis 5, worin die Teilchen aus der aus Silicateilchen und Metalloxiden bestehenden Gruppe ausgewählt sind.

7. Verfahren nach Anspruch 6, worin die Teilchen Silicateilchen sind.

8. Verfahren nach Anspruch 6, worin das Metalloxid Titandioxid ist.

9. Verfahren nach einem der Ansprüche 6 bis 8, worin die Teilchen einen Durchmesser von 20 bis 100 nm aufweisen.

10. Verfahren nach Anspruch 7, worin der optionale Modifikationsschritt (a) die Bildung von Silylalkylmethacrylatgruppen, wie z.B. funktionellen Silylpropylmethacrylatgruppen (oder verwandten funktionellen Gruppen), oder eines Gemischs aus solchen funktionellen Gruppen und passiven Silylalkylgruppen auf den Silicateilchen umfasst.

11. Verfahren nach Anspruch 10, worin die chemische Vernetzung der funktionellen Gruppen auf den Silicateilchen durch das Hinzfügen eines Copolymerisationsmonomers, wie z.B. Styrol, erreicht wird, um funktionelle Methacrylatgruppen von einem Teilchen mit funktionellen Methacrylatgruppen auf einem anderen Teilchen zu verbinden.

12. Verfahren nach einem der Ansprüche 1 bis 11, worin die Vernetzung mithilfe von Ultraviolettstrahlung oder durch die Verwendung eines radikalischen Initiators, wie z.B. Benzoylperoxid oder Diethoxyacetophenol, photolytisch aktiviert wird.

13. Verfahren nach einem der Ansprüche 1 bis 12, worin die Teilchen und das Polymer, falls verwendet, in einer Aufschlämmung auf die Oberfläche aufgetragen werden.

14. Verfahren nach Anspruch 13, worin die Aufschlämmung in einem organischen Lösungsmittel vorliegt.

15. Verfahren nach Anspruch 14, worin das Lösungsmittel aus der aus Hexan, Toluol und Ethylacetat bestehenden Gruppe ausgewählt ist.

16. Verfahren nach einem der Ansprüche 1 bis 15, worin die beschichtete Oberfläche einen Kontaktwinkel mit Wasser von zumindest 150°, vorzugsweise zumindest 160°, noch bevorzugter etwa 165°, aufweist.

17. Gegenstand, dessen Oberfläche zumindest zum Teil mit einem hydrophoben Film beschichtet ist, der durch ein Verfahren nach einem der Ansprüche 1 bis 16 aufgebracht wurde.

## Revendications

1. Procédé d'application d'un film hydrophobe à une surface, le procédé comprenant les étapes consistant à :
(a) éventuellement modifier les particules à déposer sur la surface, de manière à former des groupes fonctionnels sur celles-ci ;
(b) appliquer les particules ayant des groupes fonctionnels sur celles-ci à la surface à enduire ; et
(c) traiter les particules appliquées de sorte que les particules soient liées les unes aux autres et à la surface par réticulation chimique des groupes fonctionnels sur les particules pour ainsi former un film hydrophobe dans lequel les groupes fonctionnels sont réticulés.

2. Procédé selon la revendication 1, dans lequel, avant l'étape (b), lesdites particules ayant des groupes fonctionnels sur celles-ci sont mélangées avec un polymère non silicone réactif aux groupes fonctionnels sur les particules.

3. Procédé selon la revendication 2, dans lequel le polymère non silicone est le polyuréthane.

4. Procédé selon la revendication 3, dans lequel le polyuréthane est formé par la réaction des di- ou poly - isocyanates avec des polyols.

5. Procédé selon la revendication 4, dans lequel le polyuréthane est formé par la réaction du méthylène bis(phényl isocyanate) (MDI) avec le polydiméthylsiloxane (PDMS) avec des groupes hydroxyles à terminaisons ou du 2,2,3,3,4,4,5,5-octafluoro-1,6-hexanediol.

6. Procédé selon l'une quelconque des revendications 1 à 5, dans lequel les particules sont sélectionnées dans le groupe constitué des particules de silice et des oxydes métalliques.

7. Procédé selon la revendication 6, dans lequel les particules sont des particules de silice.

8. Procédé selon la revendication 6, dans lequel l'oxyde métallique est le dioxyde de titane.

9. Procédé selon l'une quelconque des revendications 6 à 8, dans lequel les particules ont un diamètre compris entre 20 et 100 nm.

10. Procédé selon la revendication 7, dans lequel l'étape de modification optionnelle (a) implique la génération de groupes alkylméthacrylate de silyle, comme les groupes fonctionnels de méthacrylate de propyle silyle (ou associés), ou d'un mélange de ces groupes fonctionnels et des groupes silylalkyle passifs sur les particules de silice.

11. Procédé selon la revendication 10, dans lequel la réticulation chimique des groupes fonctionnels sur les particules de silice est réalisée par addition d'un monomère de copolymérisation, comme le styrène, pour relier les groupes fonctionnels méthacrylate par une particule aux groupes fonctionnels méthacrylate sur une autre particule.

12. Procédé selon l'une quelconque des revendications 1 à 11, dans lequel la réticulation est activée par photolyse au moyen du rayonnement ultraviolet ou en utilisant un initiateur radicalaire comme le peroxyde de benzoyle ou le diéthoxyacétophénol.

13. Procédé selon l'une quelconque des revendications 1 à 12, dans lequel les particules et le polymère, s'ils sont utilisés, sont appliqués à la surface en une suspension.

14. Procédé selon la revendication 13, dans lequel la suspension est dans un solvant organique.

15. Procédé selon la revendication 14, dans lequel le solvant est sélectionné dans le groupe constitué de l'hexane, du toluène et de l'acétate d'éthyle.

16. Procédé selon l'une quelconque des revendications 1 à 15, dans lequel la surface enduite possède un angle de contact de l'eau d'au moins 150°, de préférence d'au moins 160°, et plus préférentiellement d'environ 165°.

17. Objet ayant au moins une partie de sa surface enduite d'un film hydrophobe appliqué par le procédé selon l'une quelconque des revendications 1 à 16.
